# EUROPÄISCHE PATENTSCHRIFT

(11) **EP 1 585 690 B1**
(45) Veröffentlichungstag und Bekanntmachung des Hinweises auf die Patenterteilung: **06.12.2006**
(21) Anmeldenummer: 04701343.8
(22) Anmeldetag: 12.01.2004
(51) Int. Cl.: B65D 90/00, B63B 25/28, B65G 63/00

(54) **VORRICHTUNG ZUM AUTOMATISCHEN AUS- UND EINBAU VON TWISTLOCKS**
DEVICE FOR AUTOMATICALLY MOUNTING OR REMOVING TWISTLOCKS
DISPOSITIF DE MONTAGE ET DE D MONTAGE AUTOMATIQUE DE VERROUS TOURNANTS

(30) Priorität: 15.01.2003 DE 10301197
(43) Veröffentlichungstag der Anmeldung: 19.10.2005
(73) Patentinhaber: Noell Mobile Systems & Cranes GmbH, 97080 Würzburg (DE)
(72) Erfinder: WEIS, Otto, 97241 Oberpleichfeld (DE)
(74) Vertreter: Lüdtke, Frank
(86) Internationale Anmeldenummer: PCT/DE2004/000019
(87) Internationale Veröffentlichungsnummer: WO 2004/065264

(56) Entgegenhaltungen:
- EP-A- 0 699 164
- WO-A-01/12469
- DE-A- 10 023 436
- DE-A- 10 059 260

## Beschreibung

Die Erfindung betrifft eine Vorrichtung zum automatischen Aus- oder Einbau von Twistlocks in Containerecken entsprechend dem Oberbegriff des ersten Patentanspruches.

Die Erfindung ist geeignet zum Aus- und Einbau von Twistlocks in Containerecken, die beim Transport, z. B. auf Schiffen, für eine stabile Lagerung untereinander verbunden sind, wobei der Aus- und Einbau automatisch erfolgen soll.

Alle Container, die auf dem Deck von Containerschiffen transportiert werden, werden untereinander und zum Lukendeckel hin mit Twistlocks verbunden. Das geschieht in den folgenden vier Twistlock-Handhabungsprozessen: Einbauen der Twistlocks in jede Containerecke am Kai, Verriegeln der Twistlock auf Schiff, Lösen der Twistlock auf Schiff und Ausbauen der Twistlock aus den Containerecken an Kai.

Bis auf das halbautomatische Verriegeln auf dem Schiff werden alle Tätigkeiten von Hand ausgeführt. Die Handtätigkeit des Ein- und Ausbauens der Twistlocks am Kai sind personalintensiv, kraftanstrengend, unfallgefährdend und zeitaufwendig. Daher besteht weltweit das Bedürfnis, diese Vorgänge zu automatisieren (Port of Rotterdam, Herbst 2002, S. 12, 13)

Für die Handhabung und für die Laschung auf Containerschiffen haben die Container auf der Ober- und Unterseite Eckbeschläge, in welche für den Transport auf der Oberseite Spreader oder sonstige Hebemittel eingreifen und in welche auf der Ober- und Unterseite lösbare Verbindungsmittel, wie Twistlocks, als seegängige Transportsicherungen auf Containerschiffen eingebaut werden.

Diese Twistlocks sind zwingend als Verbindungsmittel für die Container auf dem Containerschiffsdeck erforderlich. Zur Vereinfachung des Ablaufes kommen beim Verladen der Container auf dem Schiff immer mehr halbautomatische Twistlocks zum Einsatz. Mit diesem halbautomatischen Twistlocks gestaltet sich der Reglungsablauf wie folgt:

Der zum Verladen auf dem Deck eines Containerschiffes am Kai bereitstehende Container wird mit den Containerbrücken-Spreader aufgenommen und auf ca. 1,5 m Höhe angehoben. Von Hand werden in den unteren Container-Eckbeschlägen halbautomatische Twistlocks eingebaut und je nach Typ des Twistlocks durch vorgegebene Verriegelungsbewegungen gesichert. Nach der Transportfahrt mit der Containerbrückenkatze zum Containerschiff wird beim Aufsetzen des Containers auf den Lukendeckel oder auf einem bereits abgestellten Container der hammerartige Twistlock-Verriegelungsbolzen in den Eckbeschlägen eingefahren und durch das Gewicht des Containers sowie einer im Twistlock integrierten Feder die Verriegelung ausgelöst.

Mit diesem Verfahren werden alle Container auf dem Deck vertikal miteinander verbunden.

Gegen die bei Seegang auftretenden horizontalen Kräfte werden diagonal angeordnete Zugstangen eingebaut.

Beim Entladen der Container vom Containerschiff gibt es keine automatischen Mechanismen zur Entnahme des Twistlocks.

Alle Arbeiten müssen, wie nachfolgend beschrieben, von Hand durchgeführt werden.

Nach dem Entfernen der diagonalen Zugstangen werden die Twistlocks durch einen Handentriegelungsvorgang von dem unteren Container oder dem Lukendeckel gelöst. Der Container wird mit dem Containerbrücken-Spreader aufgenommen, angehoben und mit den an der Unterseite der Container überstehenden Twistlocks zum Kai transportiert. Dort in ca. 1,5 m Höhe werden die Twistlocks von Hand entnommen und in schiffseigene Gitterboxpaletten abgelegt.

Die Twistlocks sind Eigentum des Schiffes. Es wird pro Schiff immer nur ein Typ von Twistlocks verwendet.

In der europäischen Patentschrift EP 0 699 164 B1 wird ein Verfahren beschrieben, in welchem mit mechanischen Mitteln (keine Automatik) Zwischenkupplungseinheiten an Container an- und ausgebaut und in Kisten gelagert werden. Diese Kisten sind für unterschiedliche Container 6.1 m (20 ft) und 12.2 m (40 ft) verstellbar ausgeführt und müssen beim Containergrößenwechsel erst verfahren werden. Dieses Verfahren stellt allerdings kein automatisches Verfahren dar.

Dokument DE 100 59 260 A offenbart eine Vorrichtung zum automatischen Ein- und Ausbau von Twistlocks gemäss dem Oberbegriff des Anspruchs 1.

Es ist daher Aufgabe der Erfindung, eine Möglichkeit zu entwickeln, mit der der Ein- und Ausbau von Twistlocks, die die Container bei der Lagerung auf einem Schiff miteinander verbinden, automatisch erfolgen kann.

Diese Aufgabe wird durch eine Vorrichtung nach den kennzeichnenden Merkmalen des ersten Patentanspruches gelöst.

Unteransprüche geben vorteilhafte Ausgestaltungen der Erfindung wieder.

Die erfindungsgemäße Lösung sieht eine Vorrichtung zum automatischen Ein- und Ausbau von Twistlocks in Containerecken vor, mit der Twistlocks in Container unterschiedlicher Größe ein- und ausbaubar sind und die auf Container verschiedener Größen einstellbar ist. Diese Vorrichtung, die im zusammengefahrenen Zustand mit den Eckbeschlägen den Abmessungen eines 40-ft-Containers entspricht, kann problemlos mit dem Schiff, welches die Container mit den Twistlocks transportiert, mittransportiert werden. Die Vorrichtung wird, bevor ein Entladen des Schiffes erfolgt, entladen und ist auf die zu entladende Containergröße so eingestellt, dass die Container auf der Vorrichtung abgestellt werden können, wobei die Vorrichtung das Entfernen und Einsetzen der Twistlocks vornimmt.

Die Versorgung mit Energie wird dabei über ein Elektrokabel, welches z. B. an der Containerbrücke angeschlossen wird, vorgenommen. Alternativ ist eine Stromversorgung über eine integrierte Batterie möglich, wobei die Batterie während der Schiffsreise an Bord wieder aufgeladen werden könnte. Bei Verwendung einer Batterie ist es denkbar, daß die Inbetriebnahme z. B. das Auseinanderfahren und die Datenübertragung über Funk vom Schiff aus vorgenommen werden.

Die erfindungsgemäße Lösung besteht in einer vorteilhaften Ausführung aus vier nebeneinander angeordneten Containerteilen, die den so genannten Twistlock-Container bilden, in dessen Oberfläche Handhabungsöffnungen eingelassen sind, in die die zu entfernenden Twistlocks der entladenen Container ragen. Statt eines Containers aus vier Containerteilen sind auch vier nebeneinander angeordnete Container denkbar. Möglich ist es aber auch, einen einzigen Container zu verwenden, der dann aber eine Größe aufweist, die die Ausmaße aller zu bearbeitenden Container überschreitet. In der Regel sind in jedem Containerteil zwei längsförmige Handhabungsöffnungen in der Oberfläche angeordnet. Mit diesem können die gängigsten Containergrößen mit 6.1 m (20 ft) oder 12.2 (40 ft) bearbeitet werden, so dass der Abstand der Containerteile zueinander nicht mehr geändert werden muss. Sollten andere als die genannten Containergrößen bearbeitet werden, ist der Abstand der Containerteile, in denen die Twistlocks entnehmbar sind, zueinander veränderbar. Dazu gibt es verschiedene Möglichkeiten. Zum Einen ist es möglich, zwischen den Containerteilen eine automatisch Verstellbare Quer- und Längsführung für die vier Containerteile anzuordnen, mit der die Abstände der Containerteile zueinander veränderbar sind. Dazu ist es vorteilhaft, unter jedem der vier Containerteile Schwenkrollen anzuordnen, die auf der Bodenplatte befestigbar sind. Vorteilhaft ist es bei dieser Ausführungsform, mittig zwischen allen vier Containerteilen ein Aufsatzteil anzuordnen, welches die vier Containerteile gegenüber ihrem Untergrund fixiert. In einfachster Weise kann es sich bei diesem Aufsatzteil um einen Dorn handeln, mit dem die Längs- und Querführungen fixiert werden, so dass alle vier Containerteile gezielt gegenüber diesem Dorn verfahrbar sind.

Eine andere Ausführungsvariante der Erfindung sieht vor, dass nur ein Container oder Containerteil mit einem Aufsetzteil versehen ist, der den einen Container oder das Containerteil mit dem Untergrund in geeigneter Weise verbindet bzw. an diesem Untergrund fixiert.

Die anderen drei Containerteile sind mit Längs-, Quer- und Schwenkrollen in der Weise versehen, dass sie an das ersten Containerteile rangefahren werden können, wonach ein Fixieren mittels Quer- und Längsführungen folgt. Die Längs- und Querführungen können biegesteif ausgeführt werden, um die Funktionalität des Twistlock-Containers in jeder Stellung und Bodenunebenheit zu gewährleisten. Weiterhin ist es denkbar, die Containerteile größten Containermaße hinaus auseinanderzufahren, so daß eine gute Zugänglichkeit, z. B. bei der Wartung des Twistlock-Containers, gegeben ist.

Vorteilhaft ist es weiterhin, zwischen den Containerteilen Abdichtungen anzuordnen, so dass Regenwasser, Schmutz oder andere Dinge nicht zwischen die Containerteile eindringen können. Als Abdichtungen sind beispielsweise Gummi- oder Kunststoffbelege denkbar.

Innerhalb eines jeden Containerteils sind Funktionsköpfe zum Entfernen und zum Einbau der Twistlocks angeordnet. Je nach Anzahl der Handhabungsöffnungen in jedem Containerteil können ein oder zwei Funktionsköpfe mit Twistlock-Greifern angeordnet sein. Die Funktionsköpfe mit den integrierten Twistlock-Greifern, den Entriegelungshebeln, den Sensoren sowie den Twistlock-Aufnahmeteilen an der Transportkette entsprechen jeweils dem verwendeten Twistlock-Typ und sind auswechselbar. Die Twistlockgreifer ergreifen die Twistlocks und führen zum Entfernen in Verbindung mit dem Entriegelungshebel im Funktionskopf Dreh- und Zugbewegungen aus. Gegebenenfalls kann damit auch eine Rüttelvorrichtung verbunden sein, die dafür sorgt, dass der Greifer den in die Handhabungsöffnung hineinragenden Twistlock von der Öffnung des Eckbeschlages losrüttelt, so dass er einfach entfernbar ist. In jeder Vorrichtung, die aus vier Containerteilen besteht, arbeiten mindestens vier, bei zwei Handhabungsöffnungen wechselweise je vier von den acht Twistlock-Greifer unabhängig voneinander. Sobald der Twistlock-Greifer den Twistlock entfernt hat, übergibt er diesen an ein Twistlock-Aufnahmeteil an einer Transportkette, in der der Twistlock gelagert werden kann. Sobald ein Twistlock dem Twistlock-Aufnahmeteil übergeben ist, bewegt sich der Twistlock-Greifer in Richtung Handhabungsöffnung zurück und mit der Transportkette wird ein weiteres Twistlock-Aufnahmeteil an die Stelle transportiert, an der der nächste Twistlock zu erwarten ist.

Vorteilhaft ist es, mehrere Transportketten mit mehreren Aufnahmeteilen übereinander anzuordnen. Um die übereinanderliegenden Transportketten zu bestücken, ist es erforderlich, dass ein Vertikalschlitten am Twistlock-Container angeordnet ist, der den Funktionskopf und den entnommenen Twistlock in die verschiedenen Etagen zu den Transportketten verfährt und an diese abgibt. Bei mehreren übereinanderliegenden Transportketten werden zunächst alle übereinanderliegenden Twistlock-Aufnahmeteile mit Twistlocks gefüllt, wonach alle Transportketten weiterbewegt werden.

Durch die hohen Lasten, die durch den abzusetzenden Container auf den Twistlock-Container wirken, ist es vorteilhaft, die Container-Aufsetzstellen am Twistlock-Container zu verstärken. Da die normalen Eck-Aufsetzpunkte nicht mehr zur Verfügung stehen, diese ragen mit dem Twistlocks in die Handhabungsöffnung des Twistlock-Containers, müssen die, nach der Vorschrift der Container, vorgesehenen Ersatz-Aufsetzflächen herangezogen werden. Dazu können Ausstärkungen am Twistlock-Container in Form von Aufsetzstreifen angeordnet sein, die mit Abstützprofilen versehen sind, die auf eine Bodenkonstruktion innerhalb eines Containers wirken.

Weiterhin ist es vorteilhaft, ein zentrales Aufsetzteil in der Mitte zwischen den Containern anzuordnen.

Vorteilhaft ist auch eine Regeleinrichtung zum Erstellen des Abstandes zwischen den Containern.

Weiterhin ist auch eine Befahrungsöffnung im Container oder in Containerteilen von Vorteil.

Weiterhin ist es vorteilhaft, durch eine Sensorik zu erfassen, welcher Container, z. B. 6.1 m (20 ft) oder 12.2 m (40 ft) auf dem Twistlock-Container abgesetzt wird, ob ein Twistlock ein- oder auszubauen ist und wenn die Twistlocks in die Handhabungsöffnungen ragen.

Die erfindungsgemäße Lösung hat den Vorteil, dass Twistlocks von Containern verschiedener Größe in jedem Hafen automatisch und schnell aus den Ecken der Container entfernt werden können und neue Container, mit denen das Schiff beladen wird und die eine andere Größe aufweisen können, als die entladenen, sofort und automatisch mit Twistlocks versehen werden können, wonach die Beladung der Container mit den eingesetzten Twistlocks erfolgt. Danach können die Twistlock-Container mit verladen werden, so dass im nächsten Hafen nach dem Entladen und der Inbetriebnahme auf dem Kai oder auf einer Plattform an der Containerbrücke der Twistlock-Container schnell und automatisch ein Entfernen der Twistlocks von den entladenen Containern erfolgen kann. Damit ist nicht nur ein schnelles Be- und Entladen der Container möglich, sondern auch ein einfacher und preiswerter Aus- und Einbau der Twistlocks. Der Container wird bereits bei seiner Annäherung an die Twistlockcontainer sensorisch erfaßt, worauf die Twistlockgreifer und die Magaziniereinrichtungen durch geeignete Signale aktiviert werden.

Der automatische Ausbau von Twistlocks erfolgt in der Weise, dass der Twistlock-Container auf einem vorbestimmten Platz abgesetzt und mit diesem fixiert und so eingestellt wird, dass die Handhabungsöffnungen mit der Lage der Twistlocks an den Containerecken übereinstimmt. Danach wird der erste Container mit seinen Twistlocks auf dem Twistlock-Container so abgestellt, dass der überwiegende Teil der Twistlocks in die Handhabungsöffnungen des Containers ragen, wonach diese von den Twistlock-Greifern im Container erfasst und von diesen entfernt werden. Das Aufsetzen des Containers auf dem Twistlock-Container wird über Zentriereinrichtungen Flipper vorgenommen und durch Sensoren registriert. Diese können auf oder im Twistlock-Container angeordnet sein. Es besteht aber auch die Möglichkeit, dass die Sensoren im Container angeordnet sind und auf Druck oder auf Twistlocks, die in den Container ragen, reagieren. Sobald deren Endstellung erreicht ist, wird ein Signal an die Twistlock-Greifer gegeben, die die Twistlocks erfassen, drehen, ziehen und ggf. rütteln und an eine Transporteinheit übergeben. Diese Transporteinheit kann ein Twistlock-Aufnahmeteil an einer Transportkette sein, wobei mehrere Twistlock-Aufnahmeteile an einer endlosen Kette angeordnet sein können, so dass die Lagerung der Twistlocks in den Twistlock-Aufnahmeteilen mehrerer Ketten in der Weise möglich ist, dass alle Twistlocks einer oder mehrerer Schiffslukengassen in Twistlock-Aufnahmeteilen von Ketten erfolgen. Es besteht selbstverständlich auch die Möglichkeit, dass die Twistlock-Aufnahmeteile die Twistlocks zu einer Lagerungsmöglichkeit transportieren und dort ablegen.

Nachdem alle Twistlocks aus den Containern einer oder mehrerer Schiffslukengassen entfernt sind, erfolgt der Einbau der Twistlocks in umgekehrter Weise. Dazu wird der erste Container auf den Twistlock-Container aufgesetzt, wobei die Twistlocks von vier Ecken eines Containers gleichzeitig in den Container eingesetzt werden, wonach dieser auf das Schiff verladen wird. Dieser Vorgang des Ent- und Beladens wiederholt sich mehrmals, je nachdem, wie viel Containerbrücken am Schiff anstehen. Der Twistlock-Container wird als letztes auf das Schiff verladen.

Wie beschrieben gehören die aus einer Typenreihe bestehenden Twistlocks dem Containerschiff. Somit werden auf der gesamten Rundreise des Containerschiffes immer wieder die gleichen Arbeiten zur Sicherung der Ladung durchgeführt. Demnach könnte auch die gesamte Einrichtung zur automatischen Handhabung der Twistlocks an Containern mit dem Schiff mitgenommen werden.

Im Folgenden wird die Erfindung an einem Ausführungsbeispiel und 20 Figuren näher erläutert. Die Figuren zeigen:
- Figur 1:: Terminal mit Containerkran, Containerschiff und Twistlock-Container
- Figur 2:: Ausschnitt Containerschiffsdeck mit Containerbeladung
- Figur 3:: Containereckbeschläge mit verriegelten Twistlocks
- Figur 4:: Containereckbeschlag mit entriegelten Twistlocks
- Figur 5:: Terminal mit möglichen Twistlock-Container-Standorten
- Figur 6:: Isometrische Darstellung Twistlock-Container zusammengefahren
- Figur 7:: Isometrische Darstellung Twistlock-Container auseinandergefahren
- Figur 8:: Isometrische Darstellung Twistlock-Container auseinandergefahren mit Container
- Figur 9:: Isometrische Darstellung Innenausrüstung
- Figur 10:: Isometrische Detaildarstellung Innenausrüstung
- Figur 11:: Detaildarstellung Twistlock-Handhabungs- und Magaziniereinrichtung
- Figur 12:: Detaildarstellung Twistlock-Einlagerung
- Figur 13:: Querschnitt Transportketten
- Figur 14:: Querschnitt Twistlock-Handhabungseinrichtung
- Figur 15:: Übersicht 40 ft Twistlock-Container
- Figur 16:: Übersicht 45 ft Twistlock-Container
- Figur 17:: Prinzipskizze 40 ft Twistlock-Container
- Figur 18:: Prinzipskizze 45 ft Twistlock-Container
- Figur 19:: Prinzipskizze Twistlock-Sondercontainer
- Figur 20:: Verschiedene Twistlock-Varianten, die durch die Erfindung ein- und ausbar sind

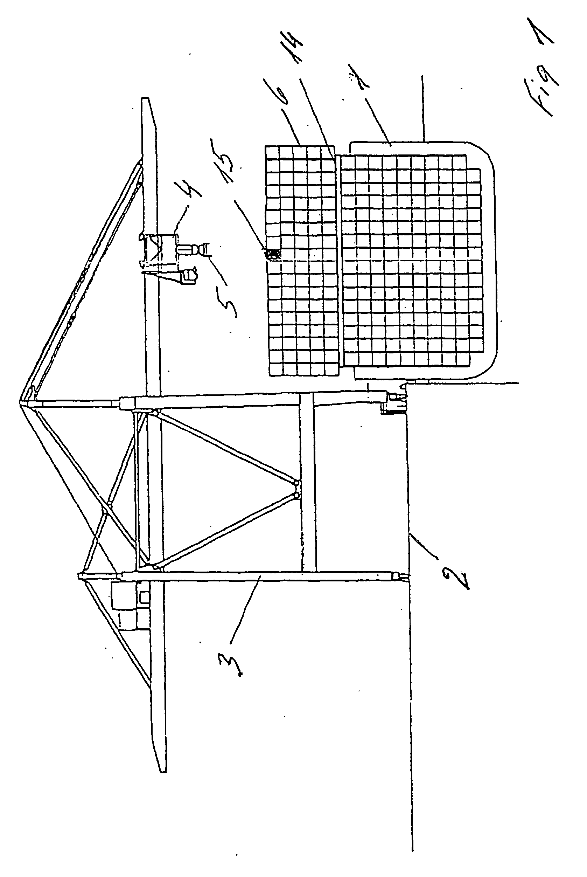

Die Figur 1 zeigt das Containerschiff 1 nach dem Anlagen am Kai 2. Es werden eine oder mehrere Containerbrücken 3 mit den Einrichtungen Containerbrücken-Katze 4 und Spreader 5 für das Entladen und Beladen der Container 6 an das Containerschiff 1 angestellt.

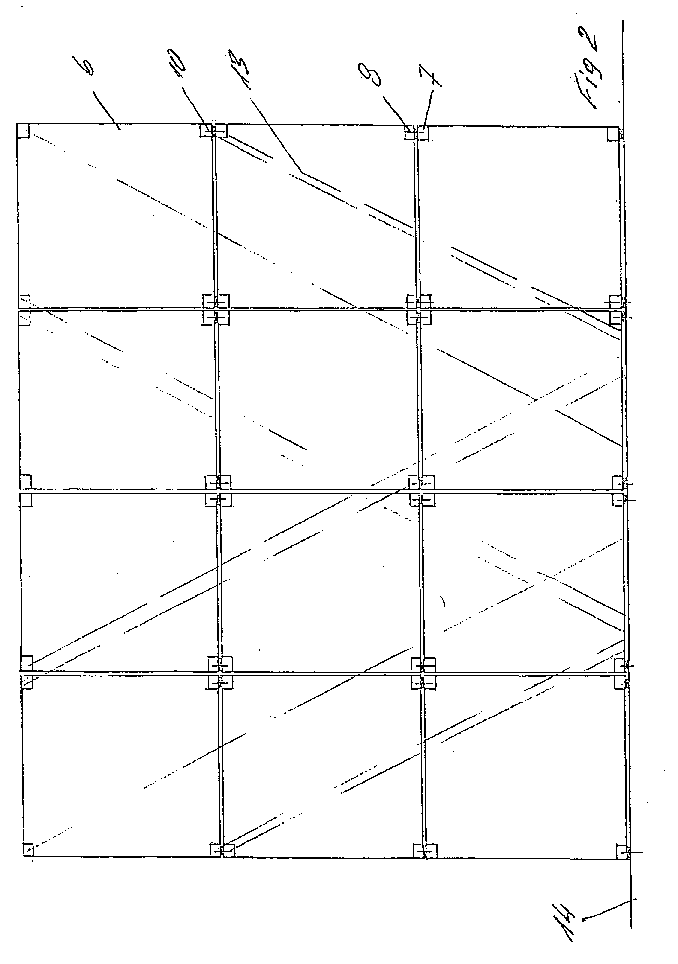

Alle Container 6, die auf Deck 14 des Containerschiffes 1 transportiert werden, sind über die Containereckbeschläge 7, 8 mit Twistlocks 10 und Zugstangen 13 seegängig gesichert (Fig. 2).

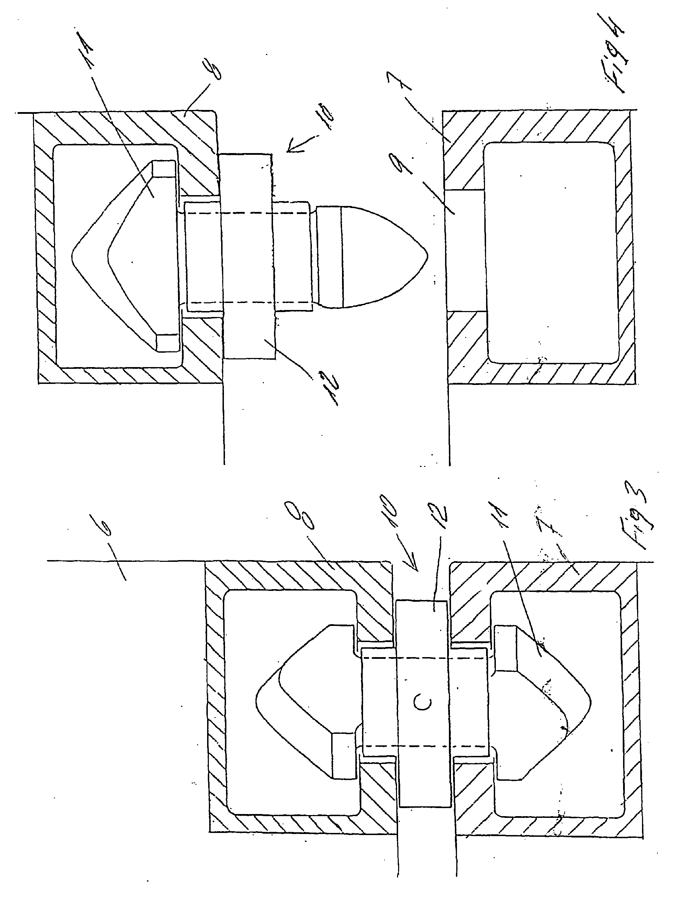

Die Twistlocks 10 bestehen im Wesentlichen aus in der Öffnung 9 der Eckbeschläge 7, 8 eingreifenden Pass- und Distanzteilen 11 und dem von Hand bzw. halbautomatisch verstellbaren hammerartigen Formteilen 12 (Fig. 3).

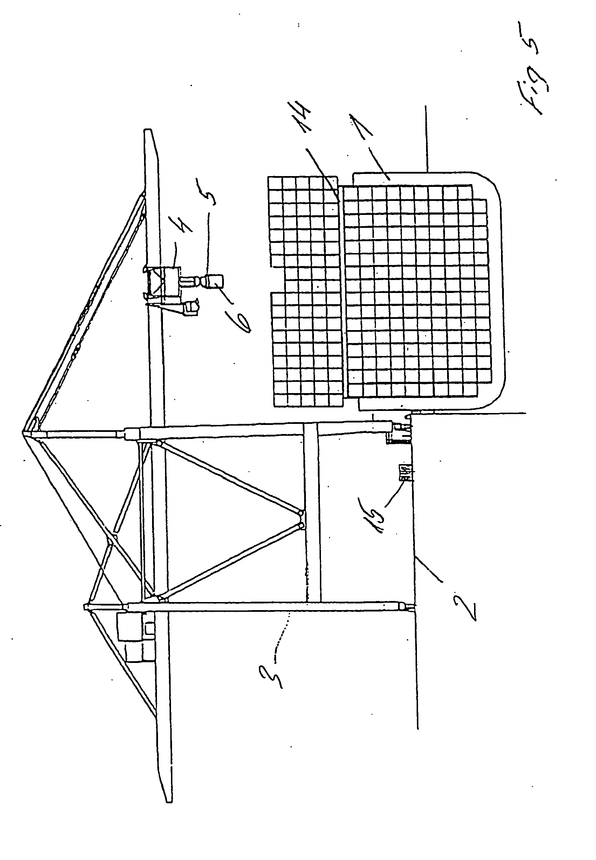

Nach dem Entfernen der Zugstangen 13 und dem Öffnen der Twistlocks 10 stehen die Container mit den aus den unteren Containereckbeschlägen 8 überstehenden Twistlocks 10 zur Entladung bereit (Fig. 4). Da die Twistlocks 10 dem Containerschiff 1 gehören und je Schiff 1 ein Typ von Twistlocks 10 zugeordnet werden kann, ist eine automatische Entnahme für die gesamte Rundreise des Containerschiffes 1 möglich.

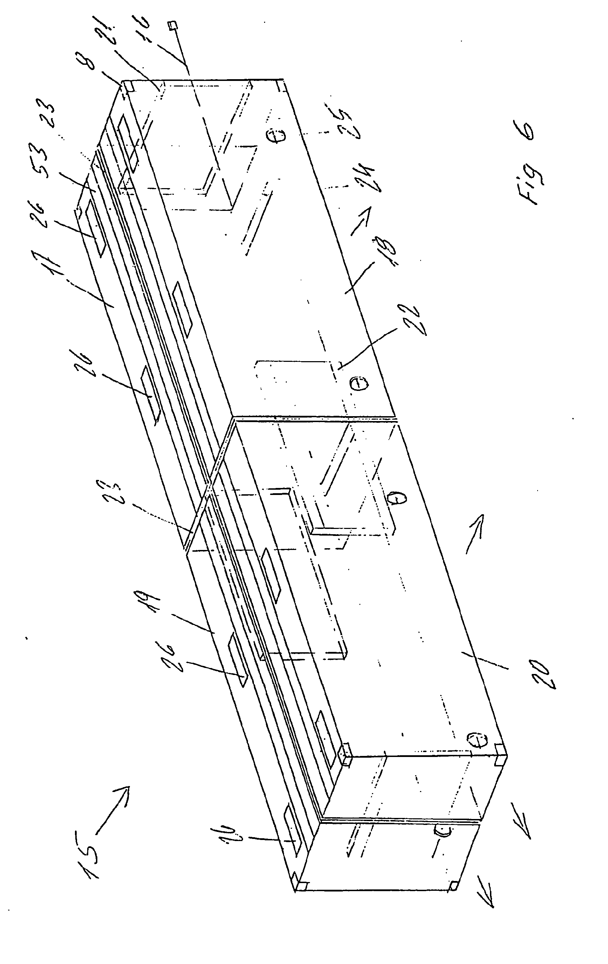

Entsprechend der maximal möglichen Anzahl von angestellten Containerbrücken 3 am Containerschiff 1 befinden sich auf dem Containerschiff 1 Twistlock-Container 15 mit der kompletten Einrichtung zur automatischen Handhabung und Magazinierung der Twistlocks 10 an unterschiedlichen Containergrößen (Fig. 5).

Nach dem Entfernen der Transportsicherung wird als erster Entladungshub der Twistlock-Container 15 mit dem Spreader 5, der Containerbrücken-Katze 4 am Kai 2 gebracht und aufgestellt.

Der mit den Maßen und den Eckbeschlägen eines 40-ft-Containers 58 dimensionierte Twistlock-Container 15 wird über ein Elektrokabel 16 an der Containerbrücke 3 angeschlossen.

Alternativ ist eine Batterieversorgung möglich, wobei den Batterien während der Schiffsreise an Bord aufgeladen werden können. Weiterhin ist es sinnvoll, den kompletten Ablauf im Twistlock-Container 15 vom Schiff aus per Funk zu steuern.

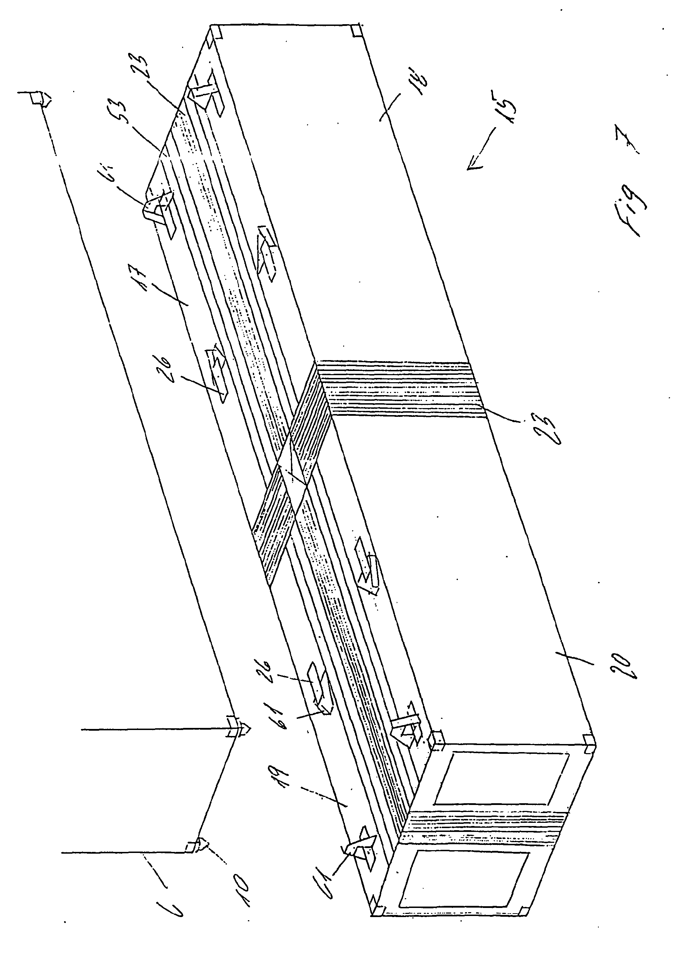

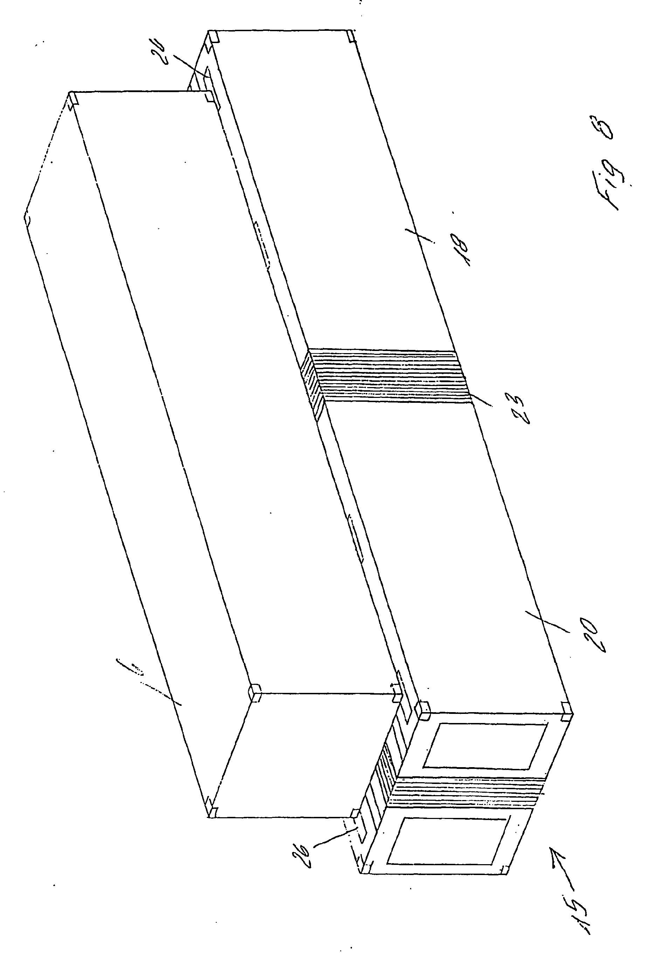

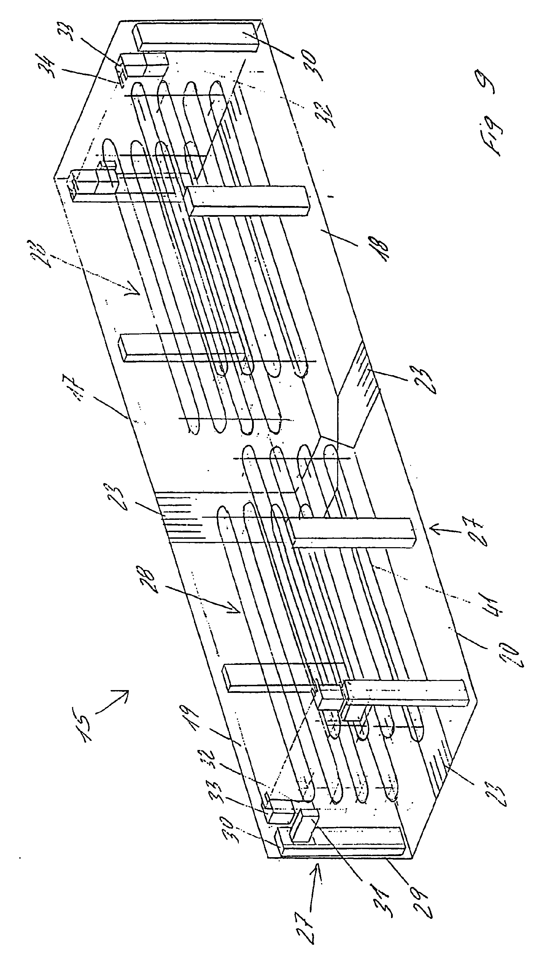

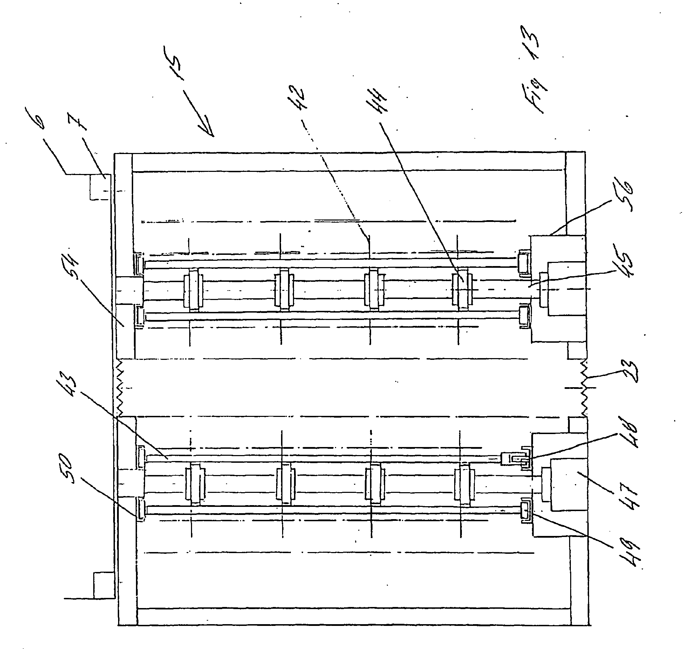

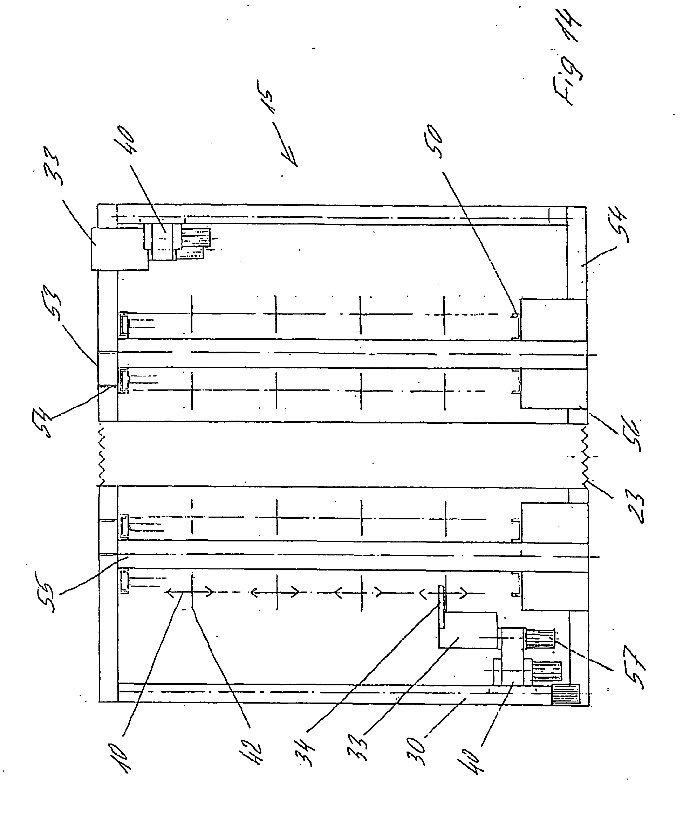

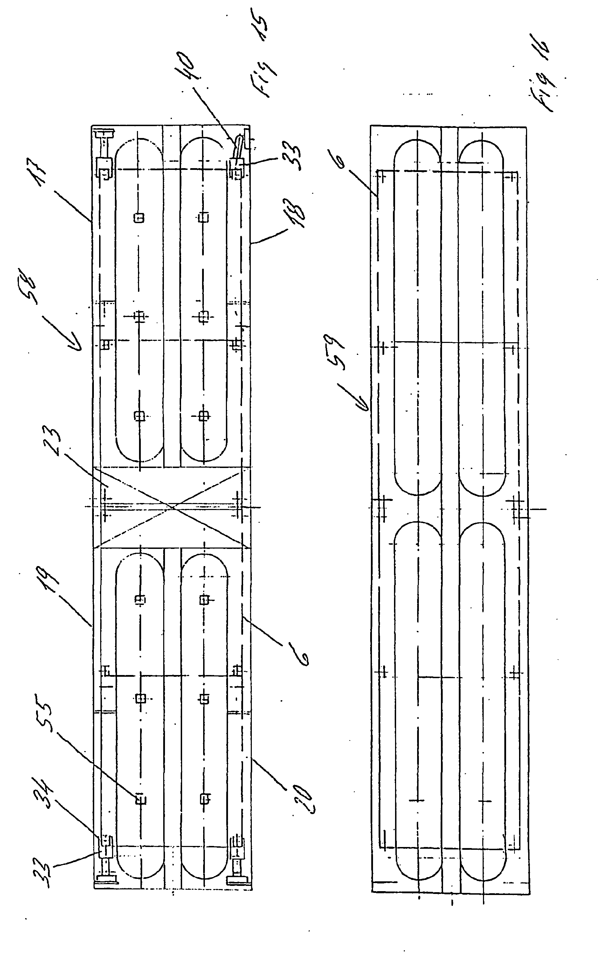

Die Figuren 6 bis 8 zeigen den Twistlock-Container im Einzelnen. Der Container 58 besteht aus vier nebeneinander angeordneten Teilen 17,18,19,20, die über Querführungen 21 und Längsführungen 22 sowie verformbare Abdichtungen 23 miteinander verbunden sind. Die Quer- und Längsführungen 21,22 sind biegesteif ausgeführt. Vom feststehenden Containerteil 17 ausgehend, das mit Aufsetzteilen 24 ausgestattet ist und fest auf dem Boden steht, werden die Containerteile 18,20 quer und die Containerteile 19,20 längs über Rollen oder Schwenkrollen 25 soweit verfahren bis die Handhabungsöffnungen 26 für die Entnahme des Twistlocks 10 an unterschiedlichen Containergrößen im Funktionsbereich liegen. An den Öffnungen 26 sind Absetzbecken 53 angeordnet, die verstärkt sind (s. Fig. 14).

Eine Alternative besteht darin, dass alle vier Containerteile 17,18,19,20 über eine zentrale mittlere Abstützung (nicht gezeichnet) quer und längs verfahren werden. Dazu sind unter allen Containerteilen 17, 18, 19, 20 Schwenkrollen angeordnet.

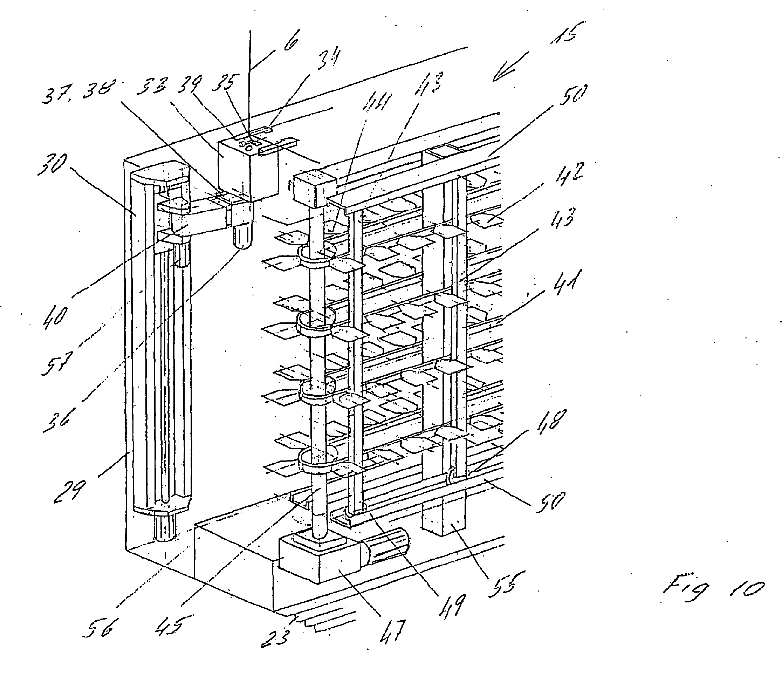

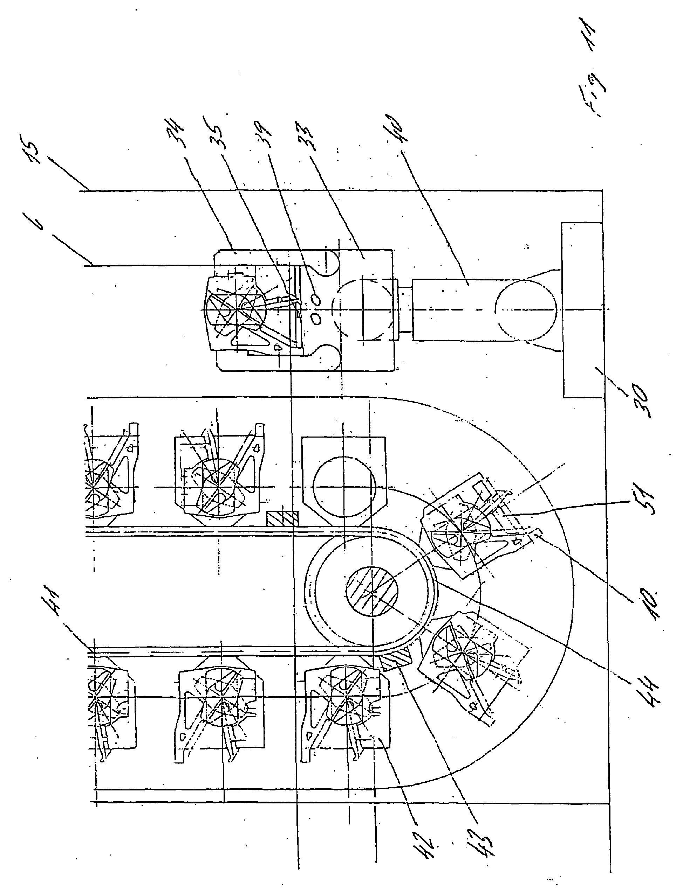

Die Figuren 9,10,11 und 12 zeigen den Aufbau der einzelnen Containerteile 17, 18, 19 und 20. Jedes der vier Containerteile 17,18,19,20 ist mit einer baugleichen Twistlock-Entnahmeeinrichtung, bestehend aus den Hauptkomponenten Handhabungseinrichtung 27 und Magaziniereinrichtung 28, ausgestattet.

Die Handhabungseinrichtung 27 besteht aus der an der Containerwand 29 befestigten vertikalen Verstelleinheit 30, einem vertikal verfahrbaren Tragarm 31 und einem Horizontalschlitten 32. Im Horizontalschlitten 32 ist der je nach Twistlock-Typ ausgelegte Funktionskopf 33 eingesetzt. Im Funktionskopf 33 eingebaut sind ein Twistlock-Greifer 34, mehrere Entriegelungshebel 35, eine Dreheinrichtung 36 zum Drehen des Funktionskopf 33, eine elastische Zwischenlage 37 angeordnet zwischen dem Funktionskopf 33 und dem Horizontalschlitten 32 sowie eine Rütteleinrichtung 38 zum eventuellen Lockern von Twistlocks 10. Weiterhin sind auf dem Funktionskopf 33 Sensoren 39 zur Iststanderfassung und zur Twistlockerkennung eingebaut.

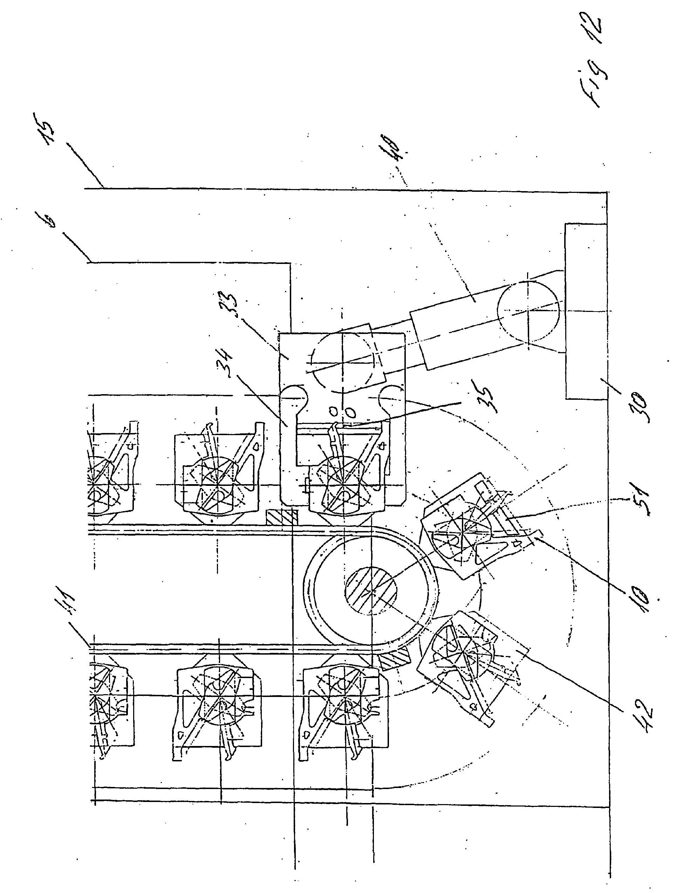

Eine Variante zum Tragarm 31 - Horizontalschlitten 32 Ausführung besteht im Einbau eines Schwenkarmes 40, wie das in Figur 11 und 12 gezeigt ist.

Die Figuren 13 und 14 zeigen die Twistlockentnahme und Magaziniereinrichtung. Die Magaziniereinrichtung 28 besteht aus einer oder mehrerer horizontal angeordneter Transportketten 41 mit angebauten Twistlock-Aufnahmeteilen 42 sowie Transportkettenverbindungsstangen 43. Der Antrieb der Transportkette 41 erfolgt über Kettenräder 44, die auf einer Antriebswelle 45 unter einer Umlenkwelle 46 aufgesteckt sind. Der Antriebsmotor 47 ist direkt an die Antriebswelle 45 angebaut. Zur vertikalen Kraftableitung und zur Führung sind an die Verbindungsstangen 43 Stützrollen 48 und Führungsrollen 49 angebaut, welche wiederum in u-förmigen Profilen 50 geführt werden.

Zum Sichern und Halten der Position in den Aufnahmeteilen 42 sind die Twistlocks 10 während des Transportes auf See und Land durch Fixierelemente 51 und Entnahmesicherungen 52 festgehalten.

Durch die Teilung eines 40-ft-Containers in vier Teile 17,18,19,20 müssen zum Aufsetzen von Container 6 Aufsetzflächen geschaffen und eine Containerverstärkung durchgeführt werden.

Die Verstärkung besteht aus den Containeraufsatzblechen 53, den Aussteifungsblechen 54, den Abstützprofilen 55 und einer Bodenkonstruktion 56 (Fig. 14).

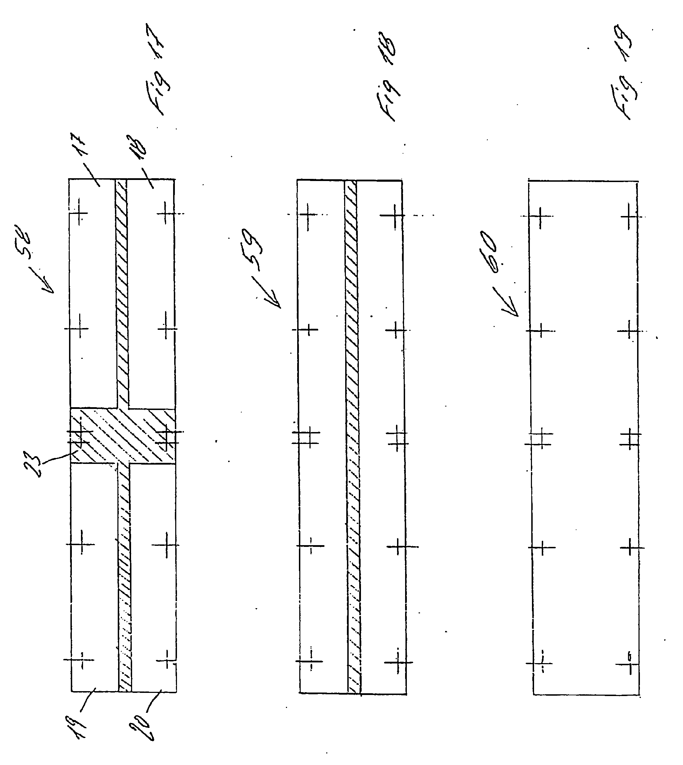

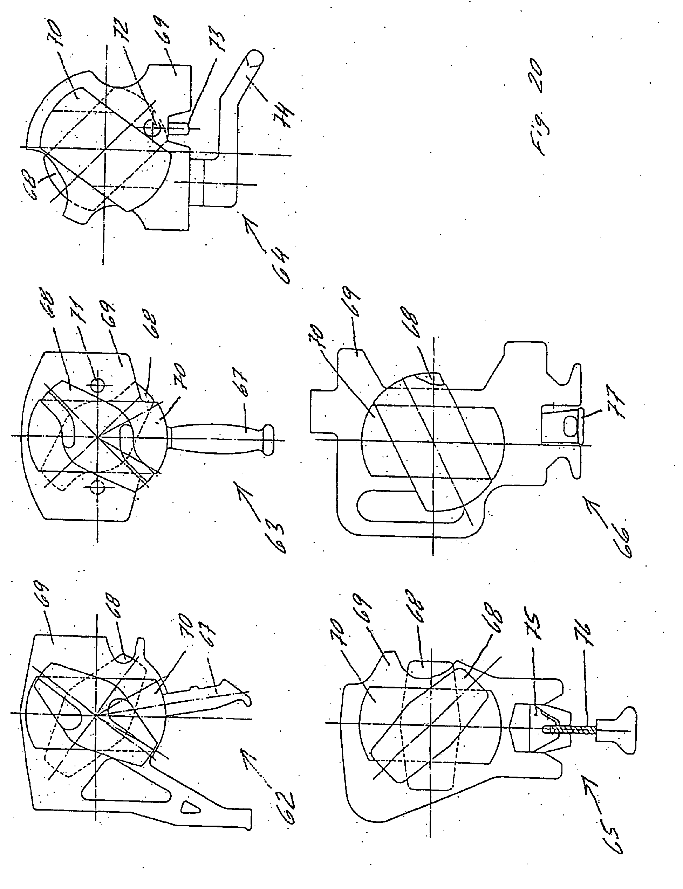

Die Figuren 15 bis 19 zeigen Anordnungen der Containerteile 17, 18, 19, 20 bei verschiedenen Containergrößen von 12.2 m (40 ft) bis 18,2 m (60 ft). Dabei ist (Fig. 16, 18) alternativ denkbar, den Twistlock-Container 15 bei Verwendung eines 13,7 m (45 ft). Containers 59 nur mit einer Querverstellung auszuführen.

Weiterhin ist denkbar (Fig. 19), dass der Twistlock-Container ohne Quer- und Längsverstellung ausgeführt wird. Dieser Container 60 wäre ein Sondercontainer und müsste dementsprechend gehandhabt werden.

Die Figur 20 zeigt verschiedene Arten von Twistlocks, die mit der erfindungsgemäßen Vorrichtung ein- und ausbaubar sind.

Im Folgenden wird das Verfahren zur automatischen Entnahme der Twistlocks beschrieben.

Nach der Überprüfung der Einsatzbereitschaft des Twistlock-Containers 15 beginnt der Entnahmeablauf. Da dem Twistlock-Container 15 nicht bekannt ist, welche Containergröße 6,1m (20 ft) oder 12,2 m (40 ft) als nächstes angeliefert wird, gehen alle Funktionsköpfe 33 mit dem eingebauten Sensoren 39 in Wartestellung. Die für die Containergröße zuständigen Sensoren 39 blicken dabei senkrecht nach oben. Nähert sich ein Container 6 mit z. B. 12,2 m (40 ft), so werden die dafür zuständigen Sensoren 39 angesprochen. Es gehen sofort Meldungen an die 12,2 m (40 ft). Flipper 61 auf der Oberseite des Twistlock-Containers 15 zur sofortigen Ausfahrt an die Funktionskopf-Twistlock-Greifer 34 zum Öffnen der Greifer, an die Magaziniereinrichtung 28 zur Bereitstellung eines freien Lagerplatzes und an die 20-ft-Funktionsköpfe 33 zur Rückfahrt in die Parkposition. Beim weiteren Senkvorgang wird der ankommende Container 6 über die Flipper 61 zentriert und auf dem Twistlock-Container 15 aufgesetzt. Die überstehenden Twistlocks 10 fahren dabei in die geöffneten Greifer 34 des bereitstehenden Funktionskopfes 33 ein. Nach dem Greifen des Twistlocks 10 im Mittelbereich des Pass- und Distanzteiles 12 werden mit dem Funktionskopf-Entriegelungshebeln 35 Bewegungen zum Lösen der Twistlocks 10 durchgeführt. Eine im Funktionskopf 33 eingebaute Rütteleinrichtung 38 kann den Lösungsvorgang unterstützen.

Der gelöste Twistlock 10 wird mit dem Greifer 34 an der Öffnung 9 der Eckbeschläge 8 ausgefahren.

Nach dem Ausbau aller Twistlocks 10 steht der Container 6 zum Weitertransport bereit.

Zur Magazinierung des Twistlocks 10 befindet sich im Twistlock-Container 15 auf vier Ebenen 160 Stück Aufnahmeteile 42 für jede Containerecke. Der vom Container 6 entnommene Twistlock 10 wird der Twistlock-Handhabungseinrichtung 27 durch Senk- und Drehbewegungen zum vorgegebenen Einlagerungplatz der Magaziniereinrichtung 28 gebracht und ein Aufnahmeteil 42 in Fixierelemente 51 verdrehsicher abgesetzt.

Für den Einbau von Twistlocks 10 in Container 6 gilt der umgekehrte Ablauf.

Die Anzahl von 160 Stück Twistlock-Lagerplätzen je Containerecke ist ausreichend, da sich auf Deck eines großen Containerschiffen 1 in einer Lukengasse maximal 120 Container 6 befinden und beim Container-Umschlagvorgang eine Ent- und Beladung vor dem weiteren Versetzen der Containerbrücke 3 stattfindet.

Im Folgenden wird der Ein- und Ausbau der beispielhaft abgebildeten Twistlocks beschrieben, wie sie in Figur 20 zu sehen sind. Die Figur 20 zeigt fünf verschiedene Twistlocks, die durch unterschiedliche Funktionsköpfe 33 im Twistlock-Container 15 zu handhaben sind. Die Funktionsköpfe 33 sind entsprechend der zu handhabenden Twistlocks 62, 63, 64, 65 oder 66 austauschbar.

Der Twistlock 62 in Figur 20 ist in verriegelter Position dargestellt, d. h. in dieser Stellung werden zwei Container 6 durch den Twistlock 62 miteinander verbunden. Die Container 6 werden voneinander gelöst, indem der Handdrehhebel 67 um 40° nach links gegen den Anschlag geschwenkt und in dieser Position durch einen Federstift gehalten wird. Beim Abheben des oberen Containers 6 verbleibt der Twistlock 62 in dessen Containerecke 7.

Das Lösen des Twistlocks 62 erfolgt z. Zt. manuell durch Drehen des Handhebels 67 um 40° nach rechts zurück in die Nullposition, Herausziehen um ca. 5 mm und Weiterschwenken um 20° nach rechts.

Das Einbringen des Twistlocks 62 erfolgt in der 20°-Position des Hebels 62. Damit der Twistlock 62 in der Containerecke 7 verbleibt, wird der Hebel zurückgeschwenkt auf die Nullposition. Dies ist auch die Ausgangsposition für das automatische Verriegeln zweier Container 6 auf dem Deck.

Der Twistlock 63 in der Figur 20 ist in verriegelter Position dargestellt, d. h. in dieser Stellung werden zwei Container 6 durch den Twistlock 63 miteinander verbunden. Die Container 6 werden voneinander gelöst, indem der Handdrehhebel 67 um 30° nach links geschwenkt und in dieser Position durch einen Federstift gehalten wird. Diese Hebelbewegung ist nur möglich, wenn die Druckstifte 71 im Gehäuse durch das Containergewicht heruntergedrückt werden. Beim Abheben des oberen Containers 6 verbleibt der Twistlock 63 in dessen Containerecke 7.

Das Lösen des Twistlock 63 erfolgt durch Drehen des Handhebels 67 über die Nullposition bis zum rechten Anschlag, d. h. um eine Gesamtdrehung von 60 °. Dies ist nur bei eingedrückten Stiften 71 möglich.

Das Einbringen des Twistlocks 63 in die Containerecke 7 erfolgt in der 30°-Anschlagposition des Handhebels 67. Damit der Twistlock 63 in der Containerecke 7 verbleibt, wird der Handhebel in die Nullposition geschwenkt. Dies ist nur bei eingedrückten Stiften 71 möglich. Der Twistlock 63 ist somit in der Ausgangsposition für das automatische Verriegeln.

Der Twistlock 64 in der Figur 20 in verriegelter Position gezeichnet, d. h. es werden in dieser Stellung zwei Container 6 durch den Twistlock 64 miteinander verbunden. Die Container 6 werden voneinander gelöst, indem der Handhebel 74 um 45° nach oben geschwenkt wird. Beim Abheben des oberen Containers 6 verbleibt der Twistlock 64 in dessen Containerecke 7.

Das Lösen des Twistlocks 64 erfolgt durch Drehung des gesamten Gehäuses 69 um 35°, wobei der Entriegelungshebel 73 um 15 mm nach unten bewegt werden muß. Dadurch wird der Sperrstift 72 ins Gehäuse 69 eingefahren und lässt somit die beschriebene Drehung des Gehäuses 69 mit dem feststehenden Twistlock-Teil 70 zu. Der Handhebel 74 muß dabei in der Ausgangsposition stehen.

Das Einbringen des Twistlocks 64 erfolgt sinngemäß wie das Lösen aus der Containerecke 7. Das Twistlockgehäuse 69 wird in der Containerecke 7 mit 35°-Drehung befestigt, wobei der Sperrstift 72 mit dem Hebel 73 ins Gehäuse 69 gezogen werden muß. Nach vollzogener Positionierung sichert der Sperrstift 72 den Twistlock 62 gegen unbeabsichtigtes Lösen. Der Handhebel 74 muß für das folgende automatische Verriegeln in die Ausgangsposition gebracht werden.

In Figur 20 ist der Twistlock 65 in verriegelter Position gezeichnet, d. h. es werden in dieser Stellung zwei Container 6 durch den Twistlock 65 miteinander verbunden. Die Container 6 werden voneinander gelöst, indem der Seilzug 76 voll herausgezogen und in dem äußeren Schlitz der Distanzplatte 75 arretiert wird. Beim Abheben des oberen Containers 6 verbleibt der Twistlock 65 in dessen Containerecke 7.

Das Lösen des Twistlocks 65 erfolgt durch Herausziehen des Seilzuges 76 auf halber Länge und entsprechender Arretierung in einem seitlichen Schlitz in der Distanzplatte 75.

Für das Einbringen des Twistlocks 65 ist der Seilzug 76 vorgespannt, wie beschrieben, d.h. die Arretierung des Seiles 76 befindet sich in dem seitlichen Schlitz der Distanzplatte 75. Damit der Twistlock 65 in der Containerecke 7 verbleibt, wird der Seilzug 76 aus dieser Arretierung gelöst, so daß das Seil 76 durch Federkraft in das Gehäuse 69 eingezogen wird. Dies ist die Ausgangsposition für das automatische Verriegeln zweier Container 6 auf dem Deck.

Der Twistlock 66 in Figur 20 ist in verriegelter Position dargestellt, d. h. es werden in dieser Stellung zwei Container 6 durch den Twistlock 66 miteinander verbunden. Die Container 6 werden voneinander gelöst, indem die Zugstange 77 um 25 mm aus dem Gehäuse 69 herausgezogen wird. Beim Abheben des oberen Containers 6 verbleibt der Twistlock 66 in dessen Containerecke 7.

Das Lösen des Twistlocks 66 aus der Containerecke 7 erfolgt durch Drehen des unteren Twistlockbolzens 68 um 150°.

Das Einbringen des Twistlocks 66 erfolgt mit ins Gehäuse 69 eingefahrener Zugstange 77. Damit der Twistlock 66 in der Containerecke 7 verbleibt, wird der untere Twistlockbolzen gegen Federdruck um 65° gedreht. Nach dem Einführen des oberen Twistlockbolzens in die Containerecke 7 dreht dieser durch Federdruck in die Ausgangsstellung zurück und ist somit für das automatische Verriegeln von zwei Containern 6 vorbereitet.

### Liste der verwendeten Bezugszeichen

- 1: Containerschiff
- 2: Kai
- 3: Containerbrücke
- 4: Containerbrücke-Katze
- 5: Spreader
- 6: Container
- 7: Oberer Containereckbeschlag
- 8: Unterer Containereckbeschlag
- 9: Öffnung im Eckbeschlag
- 10: Twistlock
- 11: Hammerartiges Formteil
- 12: Pass- und Distanzteil
- 13: Zugstangen
- 14: Deck Containerschiff
- 15: Twistlock-Container
- 16: Elektrokabel
- 17: Containerteil feststehend
- 18: Containerteil Querfahrt
- 19: Containerteil Längsfahrt
- 20: Containerteil Quer-Längsfahrt
- 21: Querführung
- 22: Längsführung
- 23: Abdichtung
- 24: Aufsetzteil
- 25: Schwenkrollen
- 26: Handhabungsöffnung
- 27: Handhabungseinrichtung
- 28: Magaziniereinrichtung
- 29: Containerwand
- 30: Vertikaleinheit
- 31: Tragarm
- 32: Horizontalschlitten
- 33: Funktionskopf
- 34: Twistlock-Greifer
- 35: Entriegelungshebel
- 36: Dreheinrichtung
- 37: Elastische Zwischenlage
- 38: Rütteleinrichtung
- 39: Sensoren
- 40: Schwenkarm
- 41: Transportketten
- 42: Twistlock-Aufnahmeteil
- 43: Verbindungsstange
- 44: Kettenräder
- 45: Antriebswelle
- 46: Umlenkwelle
- 47: Antriebsmotor
- 48: Stützrollen
- 49: Führungsrollen
- 50: U-förmiges Profil
- 51: Fixierelement

- 52: Entnahmesicherung
- 53: Container-Aufsetzblech
- 54: Aussteifungsblech
- 55: Abstützprofil
- 56: Bodenkonstruktion
- 57: Stellmotor
- 58: Container 40 ft
- 59: Container 45 ft
- 60: Sondercontainer
- 61: Flipper/Zentrierelement
- 62: Twistlock Form A
- 63: Twistlock Form B
- 64: Twistlock Form C
- 65: Twistlock Form D
- 66: Twistlock Form E
- 67: Drehhebel
- 68: Twistlock mit Einführungsphasen
- 69: Gehäuse
- 70: Zentrierung fest am Gehäuse
- 71: Druckstift
- 72: Sperrstift
- 73: Hebel
- 74: Handhebel
- 75: Distanzplatte
- 76: Seilzug/Seil
- 77: Zugstange

## Patentansprüche

1. Vorrichtung zum automatischen Ein- und Ausbau von Twistlocks (10) in Containerecken (7,8) für das Verbinden von Containern (6) untereinander, um die Stabilität beim Transport zu erhöhen, bestehend aus einem Twistlock-Container (15) Handhabungsöffnungen (26), in die der überwiegende Teil der Twistlocks (10) nach Abstellen des Containers (6) hineinragen, Handhabungseinrichtung (27) zum Entfernen oder zum Einbau des Twistlocks (10) an den Container (6), einem twistlock-Greifer (34) und Magaziniereinrichtungen (28), **dadurch gekennzeichnet, dass** ein Container-Aufsetzblech (53) sich auf der Oberfläche des Containers (15) befindet und, dass die Vorrichtung eine Sensorik aufweist mit der der Container (6) erfaßt wird, und die ein Signal auslöst, worauf im Twistlock-Container (15) die Twistlock-Greifer (34) und Magaziniereinrichtungen (28) aktiviert werden.

2. Vorrichtung nach Anspruch 1, **dadurch gekennzeichnet, dass** der Twistlock-Container (15) aus Containerteilen (17,18,19,20) besteht, deren Abstand zueinender einstellbar ist.

3. Vorrichtung nach den Ansprüchen 1 und 2, **dadurch gekennzeichnet, dass** eine im oder/und am Twistlock-Container (15) eingebaute Sensorik (39) zum Erfassen der Containergröße, der Twistlocks (10) und des Containeraufsetzvorganges vorhanden ist.

4. Vorrichtung nach den Ansprüchen 2 und 3, **dadurch gekennzeichnet, dass** an einem Containerteil (17, 18, 19, 20) ein Aufsetzteil (24) angeordnet ist, mit dem das Containerteil (17, 18, 19 ,20) gegenüber seiner Unterlage (2) fixierbar ist.

5. Vorrichtung nach den Ansprüchen 2 bis 4, **dadurch gekennzeichnet, dass** die Containerteile (17, 18, 19, 20) an ihrer Unterseite mit Längs-, Quer- oder Schwenkrollen (25) versehen sind.

6. Vorrichtung nach Anspruch 2 bis 5, **dadurch gekennzeichnet, dass** zwischen den Containerteilen (17, 18, 19, 20) Abdichtungen (23), Quer- und Längsführungen (21, 22) angeordnet sind.

7. Vorrichtung nach einem oder mehreren der Ansprüche 2 bis 6, **dadurch gekennzeichnet, daß** innerhalb eines jeden Containerteils (17,18,19,20) Funktionsköpfe (33) zum Entfernen und zum Einbau der Twistlocks (10) angeordnet sind und dass am Funktionskopf (33) eine Rütteleinrichtung (38) angeordnet ist.

8. Vorrichtung nach Anspruch 2 bis 7, **dadurch gekennzeichnet, dass** in den Containerteilen (17, 18, 19, 20) Twistlock-Aufnahmeteile (42) an einer Transportkette (41) angeordnet sind, in die die Twistlocks (10) aus dem Twistlock-Greifer (34) abgelegt werden.

9. Vorrichtung nach Anspruch 8, **dadurch gekennzeichnet, dass** mehrere Transportketten (41) mit Twistlock-Aufnahmeteiien (42) übereinander angeordnet sind und Vertikaleinheit (30), bestehend aus Tragarm (31) und Horizontalschlitten (32), für den Transport der Twistlocks (10) an die verschiedenen Transportketten (41) sorgen.

## Claims

1. An apparatus for automatically mounting and dismounting twistlocks (10) in container corners (7, 8) for connecting containers (6) together in order to increase their stability during transport, consisting of a twistlock container (15), handling holes (26) into which the major part of the twistlocks (10) project once the container (6) has been put down, a handling device (27) for removing or for mounting the twistlocks (10) to the container (6), a twistlock gripper (34) and storing devices (28), **characterized in that** a container placement sheet (53) is located on the surface of the container (15) and that the apparatus comprises sensors by means of which the container (6) is detected and which trigger a signal causing the twistlock grippers (34) and the storing devices (28) to be activated within the twistlock container (15).

2. The apparatus as set forth in claim 1, **characterized in that** the twistlock container (15) consists of container parts (17, 18, 19, 20), the spacing between said container parts being adjustable.

3. The apparatus as set forth in the claims 1 and 2, **characterized in that** sensors (39) mounted in or/and on the twistlock container (15) for detecting the size of the container, the twistlocks (10) and the process of placing the container are provided.

4. The apparatus as set forth in the claims 2 and 3, **characterized in that** a placement part (24) for fixing the container part (17, 18, 19, 20) with respect to its base (2) is disposed on a container part (17, 18, 19, 20).

5. The apparatus as set forth in the claims 2 through 4, **characterized in that** the container parts (17, 18, 19, 20) are provided on their underside with longitudinal, transverse or swivel rollers (25).

6. The apparatus as set forth in the claims 2 through 5, **characterized in that** seals (23), transverse and longitudinal guides (21, 22) are interposed between the container parts (17, 18, 19, 20).

7. The apparatus as set forth in one or more of the claims 2 through 6, **characterized in that** function heads (33) for removing or mounting the twistlocks (10) are disposed within each container part (17, 18, 19, 20) and that a vibrator (38) is disposed on the function head (33).

8. The apparatus as set forth in the claims 2 through 7, **characterized in that**, in the container parts (17, 18, 19, 20), twistlock receiving parts (42) are disposed on a conveying chain (41) into which the twistlocks (10) held by the twistlock gripper (34) are placed.

9. The apparatus as set forth in the claims 2 through 8, **characterized in that** a plurality of conveying chains (41) with twistlock receiving parts (42) are disposed one above the other and that vertical units (30), consisting of a carrier arm (31) and a horizontal cradle (32), ensure the transport of the twistlocks (10) to the various conveying chains (41).

## Revendications

1. Dispositif pour le montage et le démontage automatique, dans les coins (7, 8) de conteneurs, de verrous tournants (10) destinés à relier des conteneurs (6) en vue d'augmenter leur stabilité pendant le transport, du type constitué d'un conteneur (15) à verrous tournants, d'ouvertures de manipulation (26) dans lesquelles font saillie la plupart des verrous tournants (10), une fois le conteneur (6) déposé, d'un système de manipulation (27) destiné à retirer ou à monter le verrou tournant (10) sur le conteneur (6), d'un organe de préhension (34) du verrou tournant et de systèmes de stockage (28), **caractérisé en ce qu'**une tôle de placement (53) d'un conteneur est située à la surface du conteneur à verrous tournants (15) et que le dispositif comporte un système de capteurs servant à détecter le conteneur (6) et déclenchant un signal provoquant l'activation des organes de préhension (34) du verrou tournant et des systèmes de stockage (28) dans le conteneur à verrous tournants (15).

2. Dispositif selon la revendication 1, **caractérisé en ce que** le conteneur à verrous tournants (15) est constitué de parties de conteneur (17, 18, 19, 20), les écarts entre celles-ci étant ajustables.

3. Dispositif selon les revendications 1 et 2, **caractérisé en ce qu'**un système de capteurs (39) monté dans ou/et sur le conteneur à verrous tournant (15) et destiné à détecter la taille du conteneur, les verrous tournants (10) et le processus de placement du conteneur est fourni.

4. Dispositif selon les revendications 2 et 3, **caractérisé en ce qu'**une pièce de placement (24) permettant de fixer la partie de conteneur (17, 18, 19, 20) par rapport à son support (2) est disposée sur une partie de conteneur (17, 18, 19, 20).

5. Dispositif selon les revendications 2 à 4, **caractérisé en ce que**, sur leur face inférieure, les parties de conteneur (17, 18, 19, 20) sont munies de rouleaux longitudinaux, transversaux ou pivotants (25).

6. Dispositif selon les revendications 2 à 5, **caractérisé en ce que** des joints (23), des guides transversaux et longitudinaux (21, 22) sont interposés entre les parties de conteneur (17, 18, 19, 20).

7. Dispositif selon une ou plusieurs des revendications 2 à 6, **caractérisé en ce que** des têtes fonctionnelles (33) destinées à retirer et à monter les verrous tournants (10) sont disposées à l'intérieur de chacune des parties de conteneur (17, 18, 19, 20) et qu'un système vibrateur (38) est disposé sur la tête fonctionnelle (33).

8. Dispositif selon les revendications 2 à 7, **caractérisé en ce que**, dans les parties de conteneur (17, 18, 19, 20), des pièces formant logement (42) pour les verrous tournants et dans lesquelles les verrous tournants (10) sont déposés par l'organe de préhension (34) sont disposées sur une chaîne de transport (41).

9. Dispositif selon les revendications 2 à 8, **caractérisé en ce que** plusieurs chaînes de transport (41) comportant les pièces formant logement (42) pour les verrous tournants sont disposées l'une par-dessus l'autre et que des unités verticales (30) constituées d'un bras porteur (31) et d'un chariot horizontal (32) assurent le transport des verrous tournants (10) vers les différentes chaînes de transport (41).
